# EUROPEAN PATENT APPLICATION

(11) **EP 2 006 771 A2**
(43) Date of publication of application: **24.12.2008**
(21) Application number: 08251721.0
(22) Date of filing: 15.05.2008
(51) Int. Cl.: G06F 11/07

(54) **Detecting loss of communication with periherals**

(30) Priority: 31.05.2007 US 809105
(71) Applicant: NCR International, Inc., Dayton, Ohio 45479 (US)
(72) Inventor: Richard a Han Oaksdix, Angus DD2 5NW (GB); James Henderson, St Andrews Fife KY16 9NQ (GB)
(74) Representative: Williamson, Brian

(57) **Abstract**

Computer systems having operating systems that provide plug and play functionality for peripheral devices such as printers, web cameras, keyboards, mice and the like are known. These allow peripheral devices to be connected to the computer system in an ad hoc manner. However, if communication between a peripheral and such a computer system is lost during a time period when that computer system is shut down, no indication of this loss is given by the plug and play operating system. A method is described here for issuing error messages if communication between a peripheral and a computer system is lost. A persistent store is used to keep a record of peripherals in communication with the computer and this record is compared with detected information about presence of peripherals. The error messages may optionally be transferred to a remote management system via a communications network.

## Description

Computer systems having operating systems that provide plug and play functionality for peripheral devices such as printers, web cameras, keyboards, mice and the like are known. These allow peripheral devices to be connected to the computer system in an ad hoc manner. For example, as peripherals are connected to the computer system the operating system detects them, loads any relevant software drivers and announces to any software applications running on the computer system that the peripherals are ready to use. As the peripherals are disconnected, any relevant software drivers may be unloaded and client applications informed. These types of plug and play operating systems are advantageous for personal computers (PCs) and the like where several peripherals may be used at one time and it is often required to add, remove or replace those peripherals. However, there are other situations where such plug and play operating systems are disadvantageous and may actually cause problems. For example, it may be required to detect loss of communication between such computer systems and associated peripherals.

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Computer systems having operating systems that provide plug and play functionality for peripheral devices such as printers, web cameras, keyboards, mice and the like are known. These allow peripheral devices to be connected to the computer system in an ad hoc manner. However, if communication between a peripheral and such a computer system is lost during a time period when that computer system is shut down, no indication of this loss is given by the plug and play operating system. A method is described here for issuing error messages if communication between a peripheral and a computer system is lost. A persistent store is used to keep a record of peripherals in communication with the computer and this record is compared with detected information about presence of peripherals. The error messages may optionally be transferred to a remote management system via a communications network.

Embodiments of the present invention will now be described, by way of example, with reference to the accompanying drawings, in which:
FIG. 1 is a flow diagram of a method at computer having an operating system with plug and play functionality;
FIG. 2 is a schematic diagram of a plurality of computer systems having peripherals where the computer systems are connected to a communications network having a remote management system;
FIG. 3 is a flow diagram of a method of detecting loss of communication with one or more peripherals;
FIG. 3B is a flow diagram of another method of detecting loss of communication with one or more peripherals;
FIG. 4 is a flow diagram of a method of intentionally removing a peripheral from a computer system;
FIG. 5 is a schematic diagram of an automated teller machine arranged to detect loss of communication with one or more peripherals.

Like reference numerals are used to designate like parts in the accompanying drawings.

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

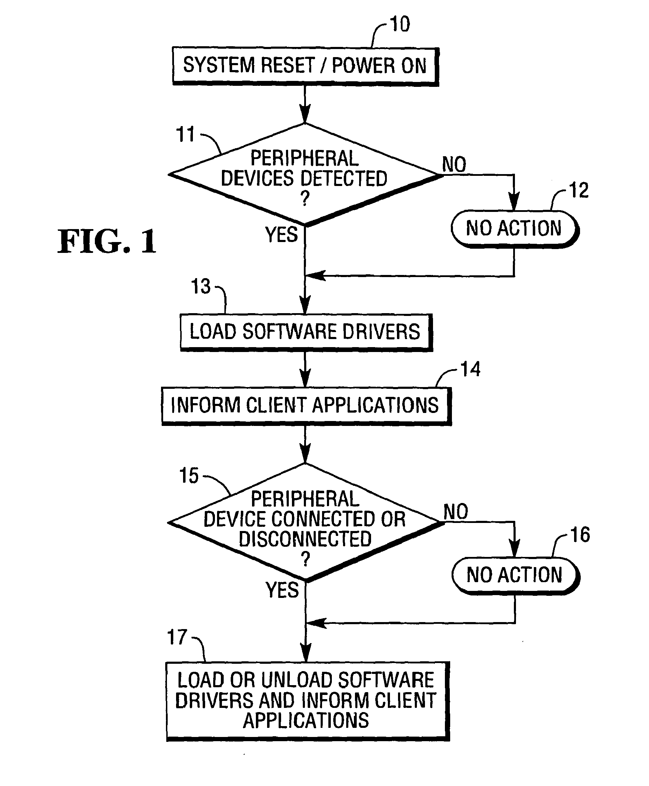

FIG. 1 is a flow diagram of a method at computer having an operating system with plug and play functionality. Once the computer is powered on or reset (block 10) the operating system monitors for peripheral devices (block 11). If no peripheral devices are detected no action is taken (block 12) apart from continuing to monitor for peripherals at block 11. If one or more peripherals are detected the operating system loads appropriate software drivers (block 13) and informs any client software applications running on the computer (block 14). The operating system continues to monitor for peripheral devices. If a peripheral device is detected as having come into communication with the computer, or as having lost communication with the computer, then software drivers are loaded or unloaded as appropriate (block 17) and client applications are informed. If no changes to peripheral devices are detected no action is taken (block 16) apart from continuing to monitor for peripheral devices.

It is recognized here that such plug and play operating systems may be problematic in certain situations where it is required to detect loss or absence of communication with one or more peripherals. For example, this may be for error detection, security, maintenance, inventory management, equipment management or other reasons. The plug and play operating system method described with respect to FIG. 1 is able to detect loss of communication with a peripheral during operation of the operating system. Also, software applications running at the computer system and which use the peripherals may also detect loss of communication with any of those peripherals during operation of the software. However, if communication with a peripheral is lost during a time in which the operating system is not active (for example, when the computer is switched off) then this loss goes undetected. Previously this problem has been ignored or non-plug and play operating systems have been used.

During a time period when an operating system of a computer is inactive, communication with one or more peripherals of the computer may be lost for a variety of reasons. For example, power supply failure at the peripheral, peripheral firmware corruption, broken communication cable, loss of wireless communication link between the peripheral and the computer, unauthorized tampering at the peripheral, malfunction at the peripheral or other reasons.

If the computer is provided at an unattended apparatus, inability to detect loss of communication with peripherals is a significant problem. For example, the computer may be arranged to control a self-service apparatus such as an automated teller machine (ATM), self-service kiosk or other unattended apparatus. In this situation, typically several peripheral devices are integral with or in communication with the computer. For example, these may be cash dispensers, receipt printers, pin pads, card readers, keyboards, bar code scanners, displays, etc. If communication between the computer and one or more of the peripherals is lost and this loss is undetected by the computer, then security may be breached and/or loss of functionality may carry on for a substantial length of time resulting in loss of profits, customer loyalty etc. A customer or operator needs to report the error manually and a maintenance engineer needs to be called to rectify the problem. This is time consuming and expensive.

Previously this problem has been addressed by using non-plug and play operating systems at unattended apparatus. However, this means that maintenance of those unattended systems is relatively complex especially where many peripherals of different types are used and it is often required to replace, add or remove those peripherals. In the case of ATMs and other self-service apparatus this is particularly the case because many peripherals are used with different combinations and types of peripherals at different apparatus locations.

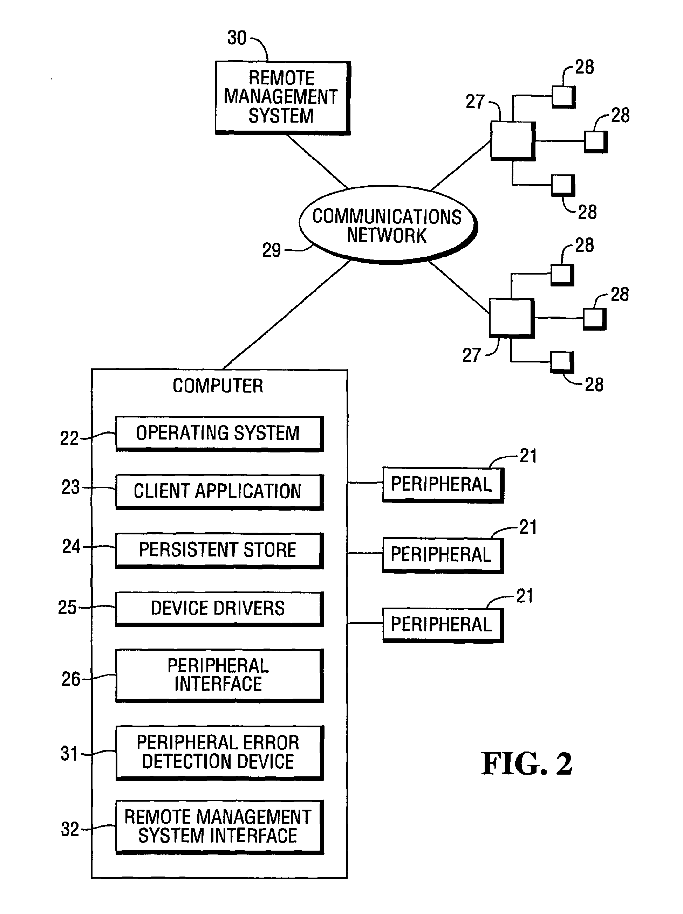

FIG. 2 shows a computer 20 and a plurality of peripherals 21 connected to that computer either using physical connections or wireless or other links. The computer 20 is in communication with a remote management system 30 via a communications network 29 of any suitable type. One or more other computers 27 with associated peripherals 28 are also in communication with the remote management system 30. In some embodiments the computers 20, 27 may be part of unattended apparatus such as ATMs. Each computer comprises at least, an operating system 22, a plurality of device drivers 25, one or more client applications 23 arranged to use the peripherals 21, an interface 26 for communicating with the peripherals and other functionality as known for a conventional computer system. The computer also comprises software 31 for detecting loss of communication with peripherals and optionally also, software 32 for interaction with the remote management system. A persistent store 24 is also provided at the computer such as a hard disk, NVRAM or other suitable type of persistent memory.

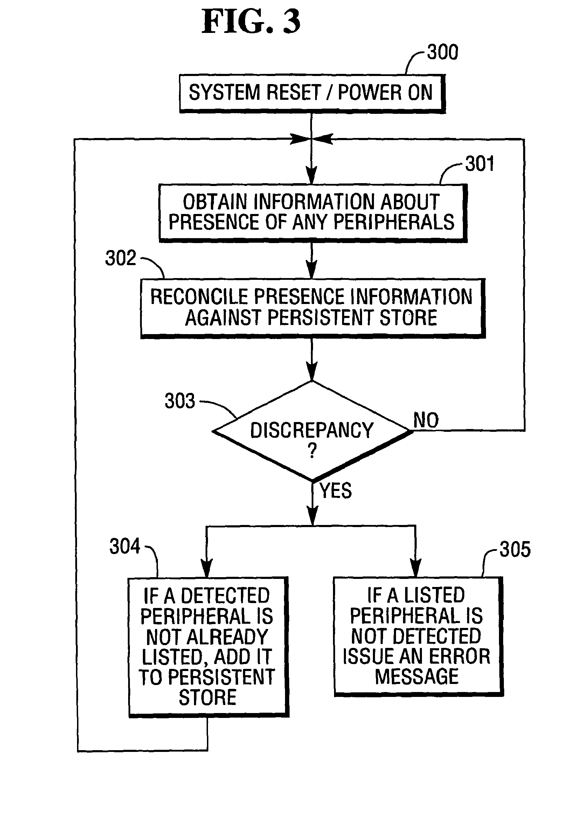

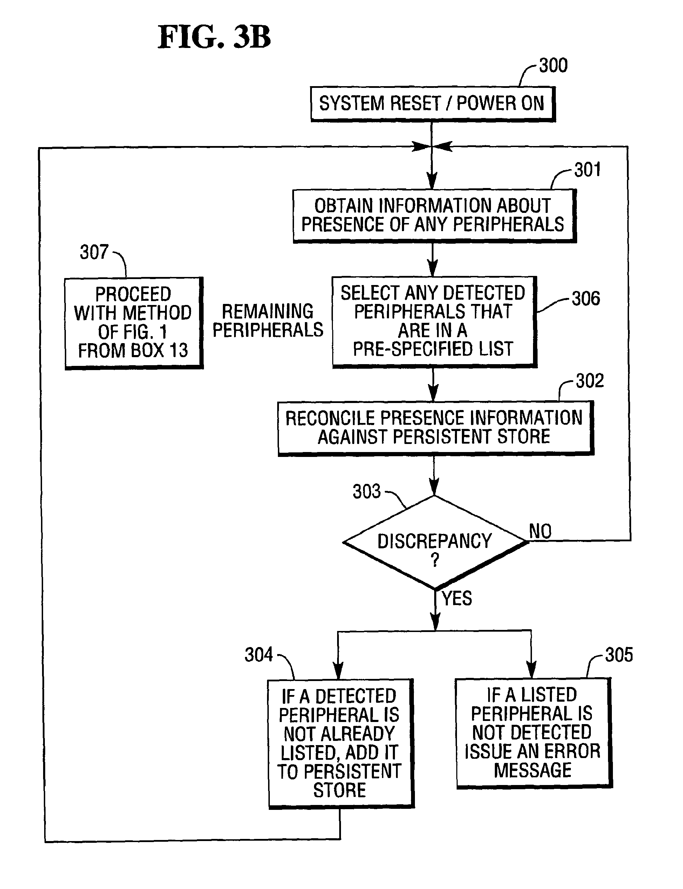

A method of detecting losses of communication between a computer and one or more peripherals is now described with reference to FIGs. 2 and 3. The computer 20 is powered on or reset at block 300. At this stage the operating system 22 of the computer 20 becomes active and obtains information about presence of any peripherals 21 that are in communication with the computer 20. This is illustrated at block 301 of FIG. 3. The computer 20 accesses the persistent store 24 and reconciles the detected peripheral presence information against that persistent store 24 (see block 302 of FIG. 3). The persistent store may comprise details of peripherals which it is expected to be present. For example, this persistent store may have been pre-configured during installation of the computer. Alternatively, the persistent store is initially empty when the computer is powered on for the first time. In that case, entries are made in the persistent store as described below.

If no discrepancy is found as a result of the reconciliation or comparison process (block 303) then the operating system continues to monitor for information about presence of any peripherals and the method repeats as indicated in FIG. 3.

If a detected peripheral is not already listed in the persistent store, it is added to the persistent store (block 304). In this way, plug and play functionality is at least partially provided because, if a peripheral is added, that peripheral is detected and the persistent store updated. The operating system loads any software drivers as appropriate and informs client applications of the availability of the peripheral as described above with reference to FIG. 1. The operating system continues to monitor for peripherals and the method repeats as indicated in FIG. 3.

If a peripheral is listed in the persistent store but is not detected (block 305) then an error message or other alert is issued. This enables errors to be detected where communication has been lost with a peripheral during a time period when the operating system is not functioning and/or during a time period when the operating system is active. The error message may optionally be sent to the remote management system 30 via the communications network 29 using the remote management system interface 32. The remote management system (and/ or the local computer 20) may be arranged to trigger automated maintenance applications to remotely investigate and attempt to repair the problem. Alternatively, an operator may be requested to attend the site and investigate the problem.

Another embodiment is now described with reference to FIG. 3B. FIG. 3B shows an example method which is the same as that of FIG. 3 except that provision is made to use the general plug-and-play method of FIG. 1 for some types of peripherals. A pre-specified list is formed and stored at the local computer 20 or at any other accessible location in the communications network 29. This pre-specified list is of peripherals for which "one-way" plug and play is to be implemented. For example, these peripherals may be cash dispensers, pin pads, printers of an ATM where it is required to detect loss of communication in all situations. Once information about peripherals is obtained (block 301) a selection is made (block 306) to pick out those peripherals which are in a pre-specified list. The method proceeds (blocks 302, 303, 304, 305) for those selected peripherals following the method of FIG. 3 which can be said to provide a "one-way" plug and play system. For any remaining peripherals the method proceeds from FIG. 1 block 13 (see block 307 of FIG. 3B) and this provides general plug-and-play for those peripherals. The pre-specified list of peripherals for which one-way plug and play is required may be pre-configured by an operator and stored at a memory which is persistent and which may or may not be the same persistent store used in the one-way plug and play system.

The method described with respect to FIGs. 3 and 3B may be implemented using software provided at the local computer 20 or provided at a node in the communications network 29, at the remote management system 30 or at any other suitable location. In one example, software 31 is provided at the local computer 20 for this purpose. That software may be provided in the form of a software layer between the operating system 22 and the client application(s) 23. In this case, the operating system 22 may be a conventional plug and play operating system of a PC. Alternatively that software 31 may be integral with the operating system 22.

The persistent store 24 may be provided at the local computer 20 or at any other location accessible to the software 31. For example, that location may be at the remote management system 30 or at a node in the communications network 29.

In some situations it may be required to intentionally remove a peripheral device. In this case it is necessary to update the persistent store in order that error messages are not unintentionally generated following the method of FIG. 3. This is achieved by using a maintenance application to update the persistent store either locally or remotely using the remote management system or other remote entity. Any suitable maintenance application may be used which is able to read from, write to and delete from the persistent store.

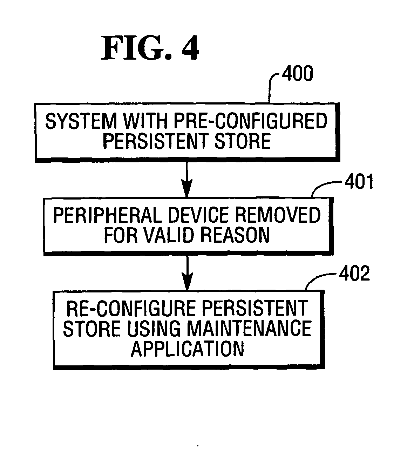

FIG. 4 is a flow diagram of a method of intentionally removing a peripheral from a computer system. The computer system is provided with a pre-configured persistent store as at block 400. The persistent store comprises information about all peripherals which it is expected to be in communication with the computer system. If a peripheral device is removed for a valid reason block 401 then the persistent store is reconfigured at block 402 using a maintenance application.

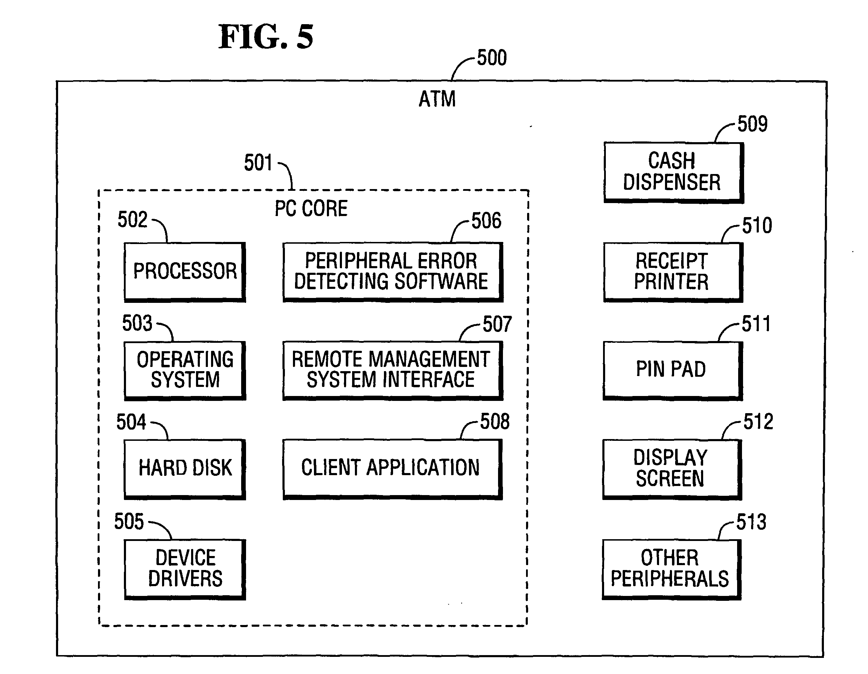

In an example now described with reference to FIG. 5, the computer is a personal computer (PC) 501 integral with an ATM 500 comprising a plurality of peripherals 513 such as cash dispensers 509, pin pads 511, receipt printers 510, display screens 512 and the like. Any suitable combination of peripherals may be used. The personal computer 501 comprises a processor 502, operating system 503, a persistent store such as a hard disk 504, one or more device drivers 505 for driving the peripherals, peripheral error detecting software 506 as described above, remote management system interface software 507 and one or more client applications 508.

Peripherals may be added to the ATM at any time and these will be detected by the operating system 503 as described above with reference to FIG. 5. However, if communication with a peripheral is lost an error message is issued as described above with reference to FIG. 3, no matter whether that communication is lost during operation of the ATM or during shut down of the ATM.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

The methods described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. It will further be understood that reference to 'an' item refer to one or more of those items.

The steps of the methods described herein may be carried out in any suitable order, or simultaneously where appropriate.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the scope of this invention.

## Claims

1. A method of detecting loss of communication between a peripheral and a computer system the method comprising:
accessing a persistent store;
storing information about the peripheral in the persistent store;
using an operating system at the computer system to monitor for presence of the peripheral;
comparing results of the monitoring with information in the persistent store; and
issuing an error message on the basis of the comparison.

2. A method as claimed in claim 1 wherein the operating system is arranged to detect peripherals in communication with the computer system and to load appropriate software drivers for those detected peripherals.

3. A method as claimed in claim 1 or claim 2, which further comprises, adding information about a peripheral to the persistent store on the basis of the comparison.

4. A method as claimed in any preceding claim, wherein the error message is issued if a peripheral indicated in the persistent store is not detected during monitoring by the operating system.

5. A method as claimed in any preceding claim,which further comprises checking a pre-specified list of peripherals and proceeding with the method on the basis of that check.

6. An apparatus arranged to detect loss of communication between a peripheral and a computer system the apparatus comprising:
a persistent store accessible to the computer system;
a processor arranged to store information about the peripheral in the persistent store;
an operating system at the computer system, the operating system arranged to monitor for presence of the peripheral;
wherein the processor is further arranged to compare results of the monitoring with information in the persistent store and to issue an error message on the basis of the comparison.

7. An apparatus as claimed in claim 6, wherein the operating system is arranged to detect peripherals in communication with the computer system and to load appropriate software drivers for those detected peripherals.

8. An apparatus as claimed in claim 6 or claim 7, wherein the processor is further arranged to add information about a peripheral to the persistent store on the basis of the comparison.

9. An apparatus as claimed in any of claims 6 to 8, wherein the processor is arranged to issue the error message if a peripheral indicated in the persistent store is not detected during monitoring by the operating system.

10. An apparatus as claimed in any of claims 6 to 9, which is incorporated into a self-service apparatus.

11. An apparatus as claimed in any of claims 6 to 10, which is incorporated into an automated teller machine.

12. One or more device-readable media with device-executable instructions for performing steps comprising:
accessing a persistent store;
storing information about a peripheral in the persistent store;
using an operating system at a computer system to monitor for presence of communication functionality between the computer system and the peripheral;
comparing results of the monitoring with information in the persistent store; and
issuing an error message on the basis of the comparison.

13. One or more device-readable media as claimed in claim 12, with device-executable instructions for performing steps comprising using the operating system to detect peripherals in communication with the computer system and to load appropriate software drivers for those detected peripherals.

14. One or more device-readable media as claimed in claim 12 or claim 13, with device-executable instructions for performing steps comprising, adding information about a peripheral to the persistent store on the basis of the comparison.

15. One or more device-readable media as claimed in any of claims 12 to 14, with device-executable instructions for performing steps comprising issuing the error message if a peripheral indicated in the persistent store is not detected during monitoring by the operating system.
